# EUROPÄISCHE PATENTSCHRIFT

(11) **EP 2 850 968 B1**
(45) Veröffentlichungstag und Bekanntmachung des Hinweises auf die Patenterteilung: **05.04.2017**
(21) Anmeldenummer: 14183507.4
(22) Anmeldetag: 04.09.2014
(51) Int. Cl.: A47B 47/02, B65G 1/02

(54) **Stückgutlager**
Piece goods warehouse
Entrepôt de marchandise automatisé

(30) Priorität: 19.09.2013 DE 102013110361
(43) Veröffentlichungstag der Anmeldung: 25.03.2015
(73) Patentinhaber: NEDCON MAGAZIJNINRICHTING B.V., 7005 BJ Doetinchem (NL)
(72) Erfinder: Heijmink, Mark B. J., 6566 WC Millingen a. d. Rijn (NL)
(74) Vertreter: Bungartz Christophersen Partnerschaft mbB Patentanwälte

(56) Entgegenhaltungen:
- EP-A1- 0 882 660
- EP-A1- 0 935 932
- GB-A- 2 174 783
- US-A- 5 279 431
- US-A- 5 628 415

## Beschreibung

Die Erfindung betrifft ein Stückgutlager für z. B. Kartongebinde oder palettierte Warenstapel, bestehend aus vertikalen Hauptstützen, quer zur Ein- und Auslagerungsrichtung angeordneten, an den Hauptstützen befestigten vorderen und hinteren Traversen und mindestens einem sich in Ein- und Auslagerungsrichtung erstreckenden, gegenüber der vorderen Traverse vertikal abgestützten Auflageprofil, dessen Oberseite sich in einer Ebene höher als die Oberkante der vorderen Traverse befindet und eine Auflage für das jeweilige Stückgut bildet, wobei die vertikale Abstützung des Auflageprofils an der Traverse durch eine Stütze erfolgt, deren oberes Ende mit dem Auflageprofil verbunden ist.

Ein solches Stückgutlager kann die kleinste Einheit in oftmals ausgedehnten Regallagern und insbesondere in Hochregallagern sein. Das Ein- und Auslagern der einzelnen Stückgüter erfolgt von einer Quergasse aus mittels Gabelstaplern oder durch Regalbediengeräte. Von der Quergasse aus lassen sich zu beiden Seiten angeordnete Stückgutlager mit Waren bestücken bzw. Waren daraus auslagern. Bestandteile des Stückgutlagers sind vertikale Stützen, die durch quer angeordnete Traversen miteinander verbunden sind. Zwischen jeweils einer vorderen und einer hinteren Traverse erstrecken sich in Ein- und Auslagerungsrichtung Auflageprofile, deren Oberseite die eigentliche Auflage für das Stückgut bildet. Nach vorne, d. h. zur Quergasse hin, sind die Auflagen offen, so dass das Stückgut durch einfaches Ziehen und damit durch eine rein horizontale Bewegung auslagerbar ist. Am anderen, also hinteren Ende ist die Auflage durch einen Anschlag begrenzt, der somit die Lagertiefe nach hinten begrenzt und ein versehentlich zu tiefes Einlagern des Stückgutes verhindert.

Das Einlagern von Stückgütern erfolgt mittels einer Transportgabel, die zum Transport des Stückguts von unten her gegen die Unterseite des Stückguts angehoben wird. Um das Stückgut in ein Lagerfach zu bewegen, muss genügend Platz auch für das Einfahren der Transportgabel vorhanden sein. Um dies zu erreichen, befinden sich die Auflagen der Auflageprofile nicht in der Ebene der querverlaufenden Traversen, sondern in einer höher angeordneten Ebene, wobei diese Höhendifferenz mindestens gleich der Bauhöhe der Transportgabel ist.

Eine Möglichkeit, die eigentliche Auflage für das Stückgut höher anzuordnen als die Oberkante der Traverse, besteht in der Verwendung von Auflageprofilen in der Querschnittsgestalt eines nach unten offenen U oder eines Hutprofils. Oft aber reicht der dadurch gewonnene vertikale Platz nicht für das Einfahren einer Transportgabel aus, zumindest werden an die Exaktheit der Höhenpositionierung durch den zum Ein- und Auslagern verwendeten Gabelstapler oder das Regalbediengerät hohe Anforderungen gestellt. Weist andererseits ein solches Auflageprofil eine deutlich größere Profilhöhe auf, ist auch der Materialeinsatz entsprechend größer. Zudem kann ein Auflageprofil mit großer Profilhöhe im Vergleich zur Profilbreite seitlich instabil werden.

Eine andere Möglichkeit, die eigentliche Auflage für das Stückgut höher anzuordnen als die Oberkante der Traverse, ist in der EP 0 935 932 A1 , die dem Oberbegriff des Anspruchs 1 der vorliegenden Anmeldung entspricht, beschrieben. Die vordere Abstützung des Auflageprofils erfolgt hierbei nicht unmittelbar auf der Traverse, sondern mittelbar über eine vertikale Stütze. Diese ist durch einen Formschluss mit dem Auflageprofil verbunden, und ist andererseits an der Traverse angeschweißt. Diese Befestigung an der Traverse erfolgt vor der eigentlichen Montage des Stückgutlagers in einem gesonderten Fertigungsprozess.

Aus der US 5,279,431, der GB 2 174 783 A und der US 5,628,415 ist es bekannt, horizontal sich erstreckende Profile an stirnseitig angeordneten Quertraversen zu befestigen, indem die Profile um ihre Längsachse geschwenkt werden, wobei an den Profilen ausgebildete Laschen in Öffnungen oder Schlitze an der Quertraverse eingreifen.

Der Erfindung liegt die **Aufgabe** zugrunde, ein geringe Anforderungen an die Genauigkeit der Höhenpositionierung eines zum Ein- und Auslagern verwendeten Gabelstaplers oder Regalbediengerätes stellendes Stückgutlager zu schaffen, welches mit geringem Fertigungs- und Montageaufwand erstellbar ist.

Die **Lösung** dieser Aufgabe ist bei einem Stückgutlager mit den eingangs angegebenen Merkmalen dadurch gekennzeichnet, dass die vordere Traverse, um die vertikale Abstützung des Auflageprofils zumindest in Traversenlängsrichtung zu fixieren, mit Formschlussstrukturen in Gestalt von Schlitzen versehen ist, dass die vordere Traverse (2) mit Formschlussstrukturen (21, 29) versehen ist, um die vertikale Abstützung des Auflageprofils (10) zumindest in Traversenlängsrichtung zu fixieren, dass das untere Ende (22) der Stütze (20) zum Eingriff in die Formschlussstrukturen (21, 29) der vorderen Traverse (2) ausgebildet ist, dass die Formschlussstrukturen Schlitze (21, 29) und Laschen (28, 25) sind, dass die hintere Traverse (3) höher als die zugehörige vordere Traverse (2) angeordnet ist und dass das Auflageprofil (10) mit seinem hinteren Ende unmittelbar an der hinteren Traverse (3) abgestützt ist.

Um mit der Montage der vertikalen Stütze zugleich deren Verriegelung an der Traverse zu erzielen, ist die Form und Anordnung der Laschen und Schlitze also dergestalt, dass die Laschen nur durch ein Schwenken der Stütze um eine horizontale Schwenkachse, die sich in Längsrichtung der Traverse erstreckt, vollständig in die Schlitze einführbar sind. Zusätzlich können die Laschen eine Kröpfung aufweisen, wodurch eine Verriegelung der Stützen in vertikaler Richtung erreicht wird.

Mit einer weiteren Ausgestaltung wird vorgeschlagen, dass die Stütze und das darauf abgestützte Auflageprofil in ihrem Verbindungsbereich mit gegenseitig verriegelnden Rastelementen versehen sind.

Erfindungsgemäß ist die hintere Traverse höher als die zugehörige vordere Traverse angeordnet ist, und dass das Auflageprofil mit seinem hinteren Ende unmittelbar an der hinteren Traverse abgestützt ist. Dies ermöglicht eine vereinfachte Bauweise mit geringerem Montageaufwand, da die zusätzliche vertikale Stütze nur im Bereich der vorderen Traverse benötigt wird, nicht hingegen im Bereich der hinteren Traverse, die daher höher als die zugehörige vordere Traverse angeordnet ist.

Schließlich wird vorgeschlagen, dass sich der Querschnitt der hinteren Traverse zusammensetzt aus einem horizontalen Schenkel, auf dem das Auflageprofil abgestützt ist, und einem vertikalen Schenkel, der sich zur Bildung eines Anschlags vertikal über die Oberseite des Auflageprofils hinaus erstreckt. Durch diesen Anschlag wird die maximale Einlagertiefe des Stückguts begrenzt bzw. lässt sich die optimale Ausnutzung der Einlagertiefe dadurch erzielen, dass ein neu einzulagerndes Stückgut zunächst in einer eher groben Tiefenposition auf dem Auflageprofil abgesetzt, und dann in Richtung zu der hinteren Traverse verschoben wird, bis es zum Anstoßen des Stückgutes an dem Anschlag kommt.

Weitere Vorteile und Einzelheiten ergeben sich aus der nachfolgenden Beschreibung zweier Ausführungsbeispiele, wobei auf die Zeichnungen Bezug genommen wird. Darin zeigen
- Fig. 1: in einer ersten Ausführungsform und in perspektivischer Darstellung ein Stückgutlager mit zwei nebeneinander angeordneten Lagerplätzen für jeweils ein Stückgut;
- Fig. 2: in einer zweiten Ausführungsform, die nicht Teil der Erfindung ist und in perspektivischer Darstellung ein Stückgutlager mit einem Lagerplatz;
- Fig. 3: in aufeinanderfolgenden Schritten die Befestigung einer Stütze an einer Traverse des Stückgutlagers.

Den statischen Grundaufbau des üblicherweise mehrgeschossigen Stückgutregals bilden im Wesentlichen vertikale Hauptstützen 1 sowie horizontal angeordnete, jeweils zwei Hauptstützen 1 miteinander verbindende Traversen 2, 3. An der Vorderseite des Stückgutregals, an der sich zum Ein- und Auslagern der Waren bzw. Stückgüter üblicherweise eine Quergasse für einen in eine Position vor jedem einzelnen Lagerplatz L verfahrbaren Gabelstapler oder für ein Regalbediengerät befindet, sind jeweils zwei Hauptstützen 1 durch eine vordere Traverse 2 verbunden. Ebenso sind an der Rückseite des Stückgutlagers jeweils zwei Hauptstützen 1 durch eine hintere Traverse 3 miteinander verbunden. Zur Verbindung der Traversen 2, 3 mit den Hauptstützen 1 können die Hauptstützen 1 als Lochprofile gestaltet sein. Dies erlaubt eine Befestigung der Traversen 2, 3 in unterschiedlichen Höhen je nach dem Lochabstand der Lochprofile.

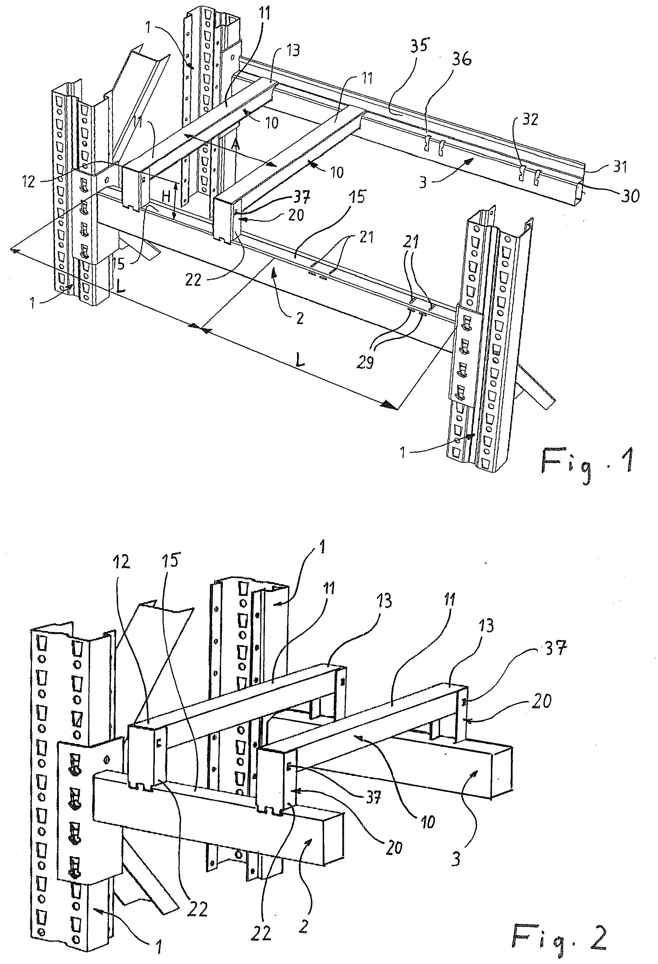

Erfindungsgemäß nach Fig. 1 befindet sich die hintere Traverse 3 nicht auf derselben Höhe wie die zugehörige vordere Traverse 2. Stattdessen ist die hintere Traverse um die Höhendifferenz H höher als die zugehörige vordere Traverse 2 an den Hauptstützen 1 befestigt.

Hingegen befindet sich bei dem Ausführungsbeispiel nach Fig. 2, das nicht Teil der Erfindung ist, die hintere Traverse 3 auf derselben Höhe wie die zugehörige vordere Traverse 2.

Bei beiden Ausführungsbeispielen erstrecken sich Auflageprofile 10 von der vorderen Traverse 2 bis zur hinteren Traverse 3. Zu jedem für die Einlagerung eines Stückguts bestimmten Lagerplatz L gehören mindestens zwei Auflageprofile 10, die sich parallel und im Abstand A zueinander erstrecken. Die flache Oberseite 11 jedes Auflageprofils 10 bildet die eigentliche Auflage für das Stückgut und erstreckt sich von vorne nach hinten waagerecht. Da für jeden Lagerplatz L mindestens zwei Auflageprofile 10 mit entsprechend zwei Auflagen 11 vorhanden sind, ergibt sich für das jeweilige Stückgut eine stabile Abstützung ohne die Gefahr eines seitlichen Kippens des Stückguts. Vorzugsweise sollte hierfür der Abstand A der beiden einen Lagerplatz L bildenden Auflageprofile 10 zwischen 60 % und 100 % der Breite des dort zu lagernden Stückgutes betragen.

Zur Einlagerung eines Stückgutes in das Regal wird das Stückgut von dem Gabelstapler bzw. von dem Regalbediengerät untergriffen. Dies geschieht mit Transportgabeln, die bis in das Stückgutlager hinein beweglich sind, und auf denen sich die Unterseite des Stückguts abstützt. Zum Einfahren der Transportgabel und zu deren Absenken mit der Folge eines Absetzens des Stückgutes auf den Auflagen 11 ist eine ausreichende Höhe H zwischen der Oberseite 15 der Traverse 2 und der eigentlichen Warenauflage, also der Oberseite 11 des Auflageprofils, erforderlich. Je größer die Höhe H ist, desto geringer sind die Anforderungen an die Genauigkeit, mit der der Gabelstapler oder das Regalbediengerät vertikal positioniert werden muss. Andererseits sollte die Höhe H auch nicht zu groß sein. Denn sie führt zu einem vertikalen Bauraumverlust bezüglich der Gesamthöhe des Regals.

Die Auflagen 11 sind nach vorne, d. h. zu der Quergasse hin, vollkommen offen und weisen dort insbesondere kein Stoppelement oder einen Anschlag auf. Dies hat den Vorteil, dass zur Entnahme des Stückgutes dessen Anheben nicht erforderlich ist, vielmehr das Stückgut durch eine einfache horizontale Bewegung von den Auflagen 11 heruntergezogen, und so dem Lagerplatz L entnommen werden kann.

Bei der Ausführungsform nach Fig. 1 ist in die andere Richtung, d. h. in Richtung der Tiefe des Lagerplatzes L, ein rückwärtiger Anschlag 35 vorhanden. Zu diesem Zweck ist der Querschnitt der hinteren Traverse 3 L-förmig mit einem horizontalen Schenkel 30 und einem vertikalen Schenkel 31. Die Oberseite 36 des horizontalen Schenkels 30 befindet sich im Wesentlichen auf derselben Höhe wie die Auflage 11, wohingegen der vertikale Schenkel 31 zur Bildung des Anschlags 35 vertikal über die Oberseite 11 des Auflageprofils 10 hinaus ragt. Der Anschlag 35 verhindert ein Positionieren des Stückgutes zu weit in der Tiefe des Stückgutlagers.

Zur Befestigung des hinteren Endes 13 des Auflageprofils 10 an der hinteren Traverse 3 ist der horizontale Schenkel 30 der Traverse 3 mit paarweisen Schlitzen 32 versehen. In diese Schlitze 32 greifen die beiden nach unten gerichteten Schenkel des als U-förmiges Profil gestalteten Auflageprofils 10 ein, wodurch es in Längsrichtung der Traverse 3 zu einer exakten Positionierung des Auflageprofils 10 an der Traverse 3 kommt. Der flach bzw. eben gestaltete, die Auflage 11 bildende Stegabschnitt des Auflageprofils 10 stützt sich dabei auf der Oberseite 36 des horizontalen Schenkels 30 ab, und schließt mit diesem nahezu in derselben Horizontalebene ab.

Das vordere Ende 12 des Auflageprofils 10 ist nicht unmittelbar an der vorderen Traverse 2 abgestützt, was bei der Ausführungsform nach Fig. 2 auch für das hintere Ende 13 des Auflageprofils gilt. Vielmehr erfolgt die vertikale Abstützung des vorderen Endes 12 bzw. bei Fig. 2 auch des hinteren Endes 13 durch eine zusätzliche kurze Stütze 20. Deren oberes Ende ist mit dem Auflageprofil 10 verbunden. Das untere Ende 22 der vertikalen Stütze 20 ist zum Eingriff in korrespondierende Formschlussstrukturen an der vorderen Traverse 2 ausgebildet.

Die Arretierung der Stütze 20 an der Traverse 2 erfolgt, indem die Stütze 20 zunächst an die Traverse 2 angesetzt, und dann zu dem Auflageprofil 10 hin bis in ihre endgültige vertikale Ausrichtung geschwenkt wird. In dieser Ausrichtung ist die Stütze 20 mittels der Formschlussstrukturen verriegelt bzw. arretiert, und zwar sowohl in Traversenlängsrichtung, als auch nach oben zu dem Auflageprofil 10 hin.

Die Formschlussstrukturen sind einerseits Schlitze 21 in der Oberseite 15 der Traverse, die sich in Ein- und Auslagerungsrichtung und damit quer zur Traversenlängsrichtung erstrecken. Für jede vertikale Stütze 20 sind zwei Schlitze 21 vorhanden, die parallel zueinander angeordnet sind.

Die vertikalen Stützen 20 haben die Gestalt kurzer Profile von U-förmigem Querschnitt aus zwei Schenkeln 26 und einem diese verbindenden Stegabschnitt 27. Der Stegabschnitt 27 weist nach außen. Er schließt vorzugsweise in einer Ebene mit der Außenseite der Traverse 2 bzw. 3 ab.

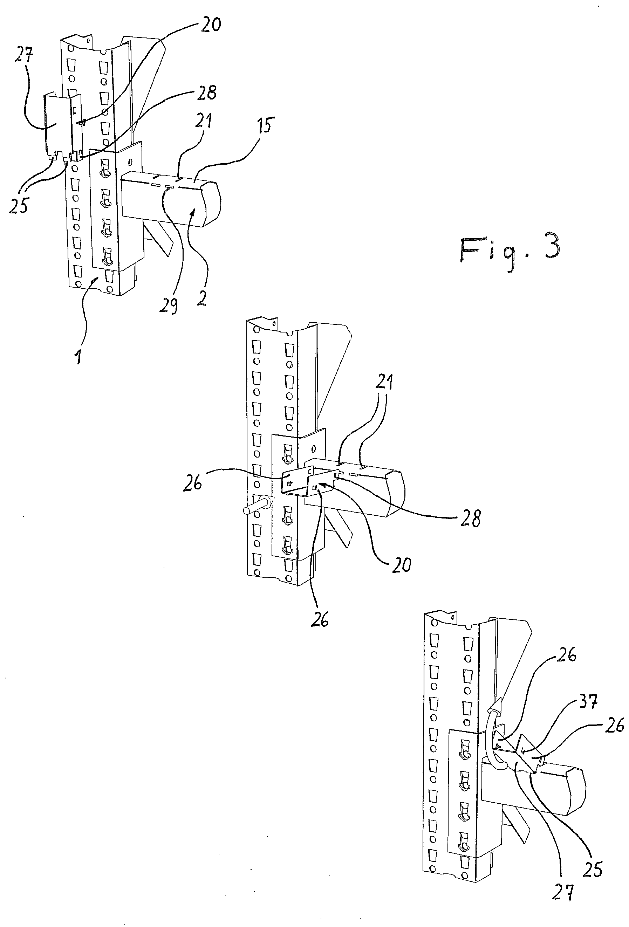

Die beiden Schenkel 26 jeder Stütze 20 sind nach unten hin jeweils zu einer einstückig angeformten Lasche 28 verlängert. Die beiden Laschen 28 fügen sich, wie Fig. 3 in aufeinander folgenden Montageschritten zeigt, bei montierter Stütze 20 in die beiden Schlitze 21 der vorderen Traverse 2 bzw. bei Fig. 2 auch der hinteren Traverse 3. Die Anordnung der Laschen 28 und der Schlitze 21 ist dergestalt, dass die Laschen 28 durch ein Schwenken der Stütze 20 um eine horizontale Achse, die sich in Längsrichtung der Traverse erstreckt, in die Schlitze 21 einführbar sind.

Zur Bereitstellung weiterer Formschlussstrukturen ist auch der nach außen weisende Stegabschnitt 27 der Stütze 20 partiell nach unten hin verlängert, und bildet dort eine Lasche oder zwei Laschen 25, die mit einer Kröpfung versehen sind (Fig. 3). Jede gekröpfte Lasche 25 greift in einen Schlitz 29 der Traverse ein. Der Schlitz 29 bildet die traversenseitige Formschlussstruktur. Der Schlitz 29 erstreckt sich in Traversenlängsrichtung und erstreckt sich längs des Kantenbereichs der Traverse, d. h. längs des Übergangs zwischen der Oberseite 15 und der Außenseite der Traverse 2 bzw. 3.

Aufgrund der an der Stütze 20 ausgebildeten Laschen sowie der Schlitze in der Traverse 2 sind die Laschen 25 nur durch das genannte Schwenken der Stütze 20 um eine horizontale Achse, die sich in Längsrichtung der Traverse erstreckt, in die Schlitze einführbar.

Aufgrund der beschriebenen Maßnahmen ist es nicht möglich, dass sich die Stützen 20 in der in den Figuren 1 und 2 wiedergegebenen Montageposition aus der Traverse 2 bzw. 3 lösen können. Vielmehr führt das Eingreifen der Laschen 25 in die Schlitze 29 und der Laschen 28 in die Schlitze 21 zu einer horizontalen Fixierung der Stützen 20, unter anderem in Traversenlängsrichtung. Zudem wird durch die Gestaltung der Formschlusselemente und insbesondere durch die S-förmige Kröpfung der Laschen 25 eine Verriegelung der Stütze 20 in vertikaler Richtung erzielt, also nach oben zu dem Auflageprofil 10 hin. Eine Verschraubung oder ein Verschweißen findet nicht statt. Die Stütze 20 könnte also auch wieder von der Traverse gelöst werden.

Eine montagetechnisch günstige Formschlussverbindung ist zwischen der Stütze 20 und dem jeweiligen Auflageprofil 10 vorhanden. Hierzu sind diese beiden Teile mit einander entsprechenden Rastelementen 37 versehen. Eine Verrastung wird erzielt, indem das entsprechende Ende 12, 13 des Auflageprofils 10 von oben her in den Profilquerschnitt der Stütze 20 gedrückt wird, bis es zum Einrasten der Rastelemente 37 kommt.

Bei der Montage eines Auflageprofils 10 wird zunächst die kurze Stütze 20 durch die beschriebene Schwenkbewegung an der jeweiligen Traverse befestigt, so dass sie ihre vertikale Montageposition einnimmt. Die Kröpfungen an den Laschen 25 verhindern, dass sich die Stütze 20 wieder vertikal lösen kann. Sodann wird bei der Ausführungsform nach Fig. 1 das Auflageprofil 10 zunächst mit seinem hinteren Ende 13 an den Schlitzen 32 der hinteren Traverse 3 befestigt. In einem letzten Montageschritt wird das vordere Ende 12 des Auflageprofils 10 soweit auf die jeweilige Stütze 20 abgesenkt, dass es zu der formschlüssigen Verriegelung und insbesondere Verrastung kommt.

Insgesamt erfolgt daher die Montage der Auflageprofile 10 ausschließlich durch das Ineinandergreifen bereits vorhandener Formschlusselemente. Andere Montagetechniken wie Verschraubungen, ein Vernieten oder ein Verschweißen sind nicht erforderlich, was die insgesamt aufzuwendenden Montagezeiten, vor allem bei der Erstellung ausgedehnter Hochregallager, erheblich reduziert. Die Stütze 20 selbst, einschließlich der Laschen 28, 25, ist ein preiswert und einfach herstellbares Blechformteil.

### Bezugszeichenliste

- 1: Hauptstütze
- 2: vordere Traverse
- 3: hintere Traverse
- 10: Auflageprofil
- 11: Auflage, Oberseite Auflageprofil
- 12: vorderes Ende
- 13: hinteres Ende
- 15: Oberseite
- 20: Stütze
- 21: Schlitz, Formschlussstruktur
- 22: unteres Ende der Stütze
- 25: Lasche mit Kröpfung
- 26: Schenkel
- 27: Stegabschnitt
- 28: Lasche
- 29: Schlitz, Formschlussstruktur
- 30: horizontaler Schenkel
- 31: vertikaler Schenkel
- 32: Schlitz
- 35: Anschlag
- 36: Oberseite
- 37: Rastelement

- A: Abstand
- H: Höhe
- L: Lagerplatz

## Patentansprüche

1. Stückgutlager, bestehend aus vertikalen Hauptstützen (1), quer zur Ein- und Auslagerungsrichtung angeordneten, an den Hauptstützen (1) befestigten vorderen und hinteren Traversen (2, 3), und mindestens einem sich in Ein- und Auslagerungsrichtung erstreckenden, gegenüber der vorderen Traverse (2) vertikal abgestützten Auflageprofil (10), dessen Oberseite (11) sich in einer Ebene höher als die Oberkante der vorderen Traverse (2) befindet und eine Auflage für das jeweilige Stückgut bildet, wobei die vertikale Abstützung des Auflageprofils (10) an der vorderen Traverse (2) durch eine Stütze (20) erfolgt, deren oberes Ende mit dem Auflageprofil (10) verbunden ist, **dadurch gekennzeichnet, dass** die vordere Traverse (2) mit Formschlussstrukturen (21, 29) versehen ist, um die vertikale Abstützung des Auflageprofils (10) zumindest in Traversenlängsrichtung zu fixieren, dass das untere Ende (22) der Stütze (20) zum Eingriff in die Formschlussstrukturen (21, 29) der vorderen Traverse (2) ausgebildet ist, dass die Formschlussstrukturen Schlitze (21, 29) und Laschen (28, 25) sind, dass die hintere Traverse (3) höher als die zugehörige vordere Traverse (2) angeordnet ist und dass das Auflageprofil (10) mit seinem hinteren Ende unmittelbar an der hinteren Traverse (3) abgestützt ist.

2. Stückgutlager nach Anspruch 1, **dadurch gekennzeichnet, dass** die Schlitze (21, 29) an der Traverse (2), und die Laschen (28, 25) an der Stütze (20) ausgebildet sind.

3. Stückgutlager nach Anspruch 1 oder 2, **gekennzeichnet durch** eine Anordnung der Laschen (28, 25) und Schlitze (21, 29) dergestalt, dass die Laschen (28, 25) **durch** ein Schwenken der Stütze (20) um eine horizontale Schwenkachse in die Schlitze (21, 29) einführbar sind.

4. Stückgutlager nach Anspruch 1, 2 oder 3, **gekennzeichnet durch** mindestens einen Schlitz (29), der sich in Längsrichtung der Traverse (2) erstreckt.

5. Stückgutlager nach Anspruch 4, **dadurch gekennzeichnet, dass** die in den mindestens einen Schlitz (29) greifende Lasche (25) mit einer vorzugsweise S-förmigen Kröpfung versehen ist.

6. Stückgutlager nach einem der Ansprüche 1 bis 5, **gekennzeichnet durch** zwei Schlitze (21), die quer zur Traverse (2) angeordnet sind und in die zwei Laschen (28) der Stütze (20) eingreifen.

7. Stückgutlager nach einem der vorangehenden Ansprüche, **dadurch gekennzeichnet, dass** das Auflageprofil (10) und die Stütze (20) in ihrem Verbindungsbereich mit gegenseitig verriegelnden Rastelementen (37) versehen sind.

8. Stückgutlager nach einem der vorangehenden Ansprüche, **dadurch gekennzeichnet, dass** sich der Querschnitt der hinteren Traverse (3) zusammensetzt aus einem horizontalen Schenkel (30), auf dem das Auflageprofil (10) abgestützt ist, und einem vertikalen Schenkel (31), der sich zur Bildung eines Anschlags vertikal über die Oberseite (11) des Auflageprofils (10) hinaus erstreckt.

## Claims

1. Article store, consisting of vertical main supports (1), front and rear cross-members (2, 3) which are arranged transversely with respect to the storage and retrieval directions and are fastened on the main supports (1), and at least one bearing profile (10), which extends in the storage and retrieval directions, is supported vertically relative to the front cross-member (2), and of which the upper side (11) is located in a plane higher than the upper edge of the front cross-member (2) and forms a bearing means for the respective article, wherein the bearing profile (10) is supported vertically on the front cross-member (2) by a support (20), of which the upper end is connected to the bearing profile (10), **characterised in that** the front cross-member (2) is provided with form-fit structures (21, 29) in order to fix the vertical support of the bearing profile (10) at least in the longitudinal direction of the cross-member, **in that** the lower end (22) of the support (20) is configured for engagement in the form-fit structures (21, 29) of the front cross-member (2), **in that** the form-fit structures are slots (21, 29) and tabs (28, 25), **in that** the rear cross-member (3) is arranged higher than the associated front cross-member (2), and **in that** the bearing profile (10) has a rear end supported directly on the rear cross-member (3).

2. Article store according to claim 1, **characterised in that** the slots (21, 29) are formed on the cross-member (2) and the tabs (28, 25) are formed on the support (20).

3. Article store according to claim 1 or 2, **characterised by** an arrangement of the tabs (28, 25) and slots (21, 29) such that the tabs (28, 25) can be introduced into the slots (21, 29) by pivoting of the support (20) about a horizontal pivot axis.

4. Article store according to claim 1, 2 or 3, **characterised by** at least one slot (29) which extends in the longitudinal direction of the cross-member (2).

5. Article store according to claim 4, **characterised in that** the tab (25) which engages in the at least one slot (29) is provided with a preferably S-shaped angled portion.

6. Article store according to one of claims 1 to 5, **characterised by** two slots (21) which are arranged transversely with respect to the cross-member (2) and in which two tabs (28) of the support (20) engage.

7. Article store according to one of the preceding claims, **characterised in that** the bearing profile (10) and the support (20) are provided in their connection region with latching elements (37) which lock reciprocally.

8. Article store according to one of the preceding claims, **characterised in that** the cross-section of the rear cross-member (3) is made up of a horizontal arm (30), on which the bearing profile (10) is supported, and a vertical arm (31), which extends vertically beyond the upper side (11) of the bearing profile (10) in order to form a stop.

## Revendications

1. Installation d'entreposage de marchandises, constituée de montants principaux verticaux (1), de traverses avant et arrière (2, 3) fixées aux montants principaux (1), disposées transversalement à la direction d'entrée et de sortie des stocks et d'au moins un profilé d'appui (10) supporté verticalement par rapport à la traverse avant (2), s'étendant dans la direction d'entrée et de sortie des stocks, dont le côté supérieur (11) se trouve dans un plan supérieur au bord supérieur de la traverse avant (2) et forme un appui pour la marchandise particulière, le support vertical du profilé d'appui (10) sur la traverse avant (2) étant réalisé par un montant (20) dont l'extrémité supérieure est raccordée au profilé d'appui (10), **caractérisée en ce que** la traverse avant (2) est pourvue de structures d'engagement par correspondance de formes (21, 29) pour fixer le support vertical du profilé d'appui (10) au moins dans la direction longitudinale de la traverse, **en ce que** l'extrémité inférieure (22) du montant (20) est réalisée pour s'engager dans des structures d'engagement par correspondance de formes (21, 29) de la traverse avant (2), **en ce que** les structures d'engagement par correspondance de formes sont des fentes (21, 29) et des pattes (28, 25), **en ce que** la traverse arrière (3) est disposée plus haut que la traverse avant (2) associée et **en ce que** le profilé d'appui (10) est supporté avec son extrémité arrière directement sur la traverse arrière (3).

2. Installation d'entreposage de marchandises selon la revendication 1, **caractérisée en ce que** les fentes (21, 29) sont réalisées au niveau de la traverse (2), et les pattes (28, 25) sont réalisées au niveau du montant (20).

3. Installation d'entreposage de marchandises selon la revendication 1 ou 2, **caractérisée par** un agencement des pattes (28, 25) et des fentes (21, 29) de telle sorte que les pattes (28, 25) puissent être introduites dans les fentes (21, 29) par pivotement du montant (20) autour d'un axe de pivotement horizontal.

4. Installation d'entreposage de marchandises selon la revendication 1, 2 ou 3, **caractérisée par** au moins une fente (29) qui s'étend dans la direction longitudinale de la traverse (2).

5. Installation d'entreposage de marchandises selon la revendication 4, **caractérisée en ce que** la patte (25) s'engageant dans l'au moins une fente (29) est pourvue d'un coude de préférence en forme de S.

6. Installation d'entreposage de marchandises selon l'une quelconque des revendications 1 à 5, **caractérisée par** deux fentes (21) qui sont disposées transversalement à la traverse (2) et qui viennent en prise dans les deux pattes (28) du montant (20).

7. Installation d'entreposage de marchandises selon l'une quelconque des revendications précédentes, **caractérisée en ce que** le profilé d'appui (10) et les montants (20) sont pourvus dans leur région de connexion d'éléments d'encliquetage (37) se verrouillant mutuellement.

8. Installation d'entreposage de marchandises selon l'une quelconque des revendications précédentes, **caractérisée en ce que** la section transversale de la traverse arrière (3) est constituée d'une branche horizontale (30) sur laquelle est supporté le profilé d'appui (10) et d'une branche verticale (31) qui s'étend pour former une butée verticalement au-delà du côté supérieur (11) du profilé d'appui (10).
